Europäisches Patentamt

European Patent Office

Office européen des brevets

(11) Publication number: **0 164 258**
A1

# EUROPEAN PATENT APPLICATION

(21) Application number: 85303880.0

(22) Date of filing: 03.06.85

(51) Int. Cl.⁴: **H 04 N 3/20, H 04 N 5/21**

(30) Priority: 05.06.84 GB 8414312

(43) Date of publication of application: 11.12.85
Bulletin 85/50

(84) Designated Contracting States: DE FR IT NL

(71) Applicant: **MOTOROLA, INC., 1303 East Algonquin Road, Schaumburg, Illinois 60196 (US)**

(72) Inventor: **Jobling, David Trevor, 7 Avenue Soret, CH-1203 Geneva (CH)**
Inventor: **Newton, Anthony David, Les Jordils, CH-1261 Le Vaud (CH)**

(74) Representative: **Ibbotson, Harold et al, Motorola Ltd Patent and Licensing Operations - Europe Jays Close Viables Industrial Estate, Basingstoke Hampshire RG22 4PD (GB)**

(54) **Failure detection circuit.**

(57) A television deflection system failure detection circuit is described in which a first latch (8) is set during a first portion of the frame period and is reset by a fly-back signal the output of the latch being gated by a gating circuit (17, 19-21) to set a reset or output latch (18) during a second portion of the frame period which does not overlap the first portion, and in dependence upon the state of the first latch (8).

0164258

# FAILURE DETECTION CIRCUIT

## FIELD OF INVENTION

This invention relates to a failure detection circuit for detecting the failure of the vertical deflection system in a television type display.

## BACKGROUND ART

Serious damage can occur to the television tube if the vertical deflection system fails while the cathode ray tube remains on.

Several different types of failure to the deflection system may occur. For example the vertical deflection coils themselves may fail either with an open or a short circuit, or the power amplifier which drives the deflection coils may fail or become disconnected.

A problem with known failure detection circuits is that they are often only capable of detecting a fault in the defection coils themselves and often only a single fault condition, such as an open circuit.

This invention seeks to provide a failure detection circuit in which the above mentioned disadvantage is mitigated.

## BRIEF DESCRIPTION OF INVENTION

In accordance with the present invention a logic circuit is provided, responsive to a flyback signal derived from the back e m.f. induced on the deflection coils during frame flyback, for providing an indication of the condition of the vertical deflection system.

In an embodiment of the invention the logic circuit includes a latch set during a predetermined period of the frame scan and reset by the flyback signal, further logic means being provided responsive to the output of the latch for providing the said indication.

The further logic means conveniently comprises an output latch and gating means operative to set and reset the output latch in dependence upon the state of the said latch.

BRIEF DESCRIPTION OF DRAWINGS

An exemplary embodiment of the invention will now be described with reference to the drawings in which;

Figure 1 illustrates a preferred embodiment of a failure detection system in accordance with the present invention and;

Figure 2 illustrates timing diagrams for the embodiment of Figure 1.

DETAILED DESCRIPTION OF INVENTION

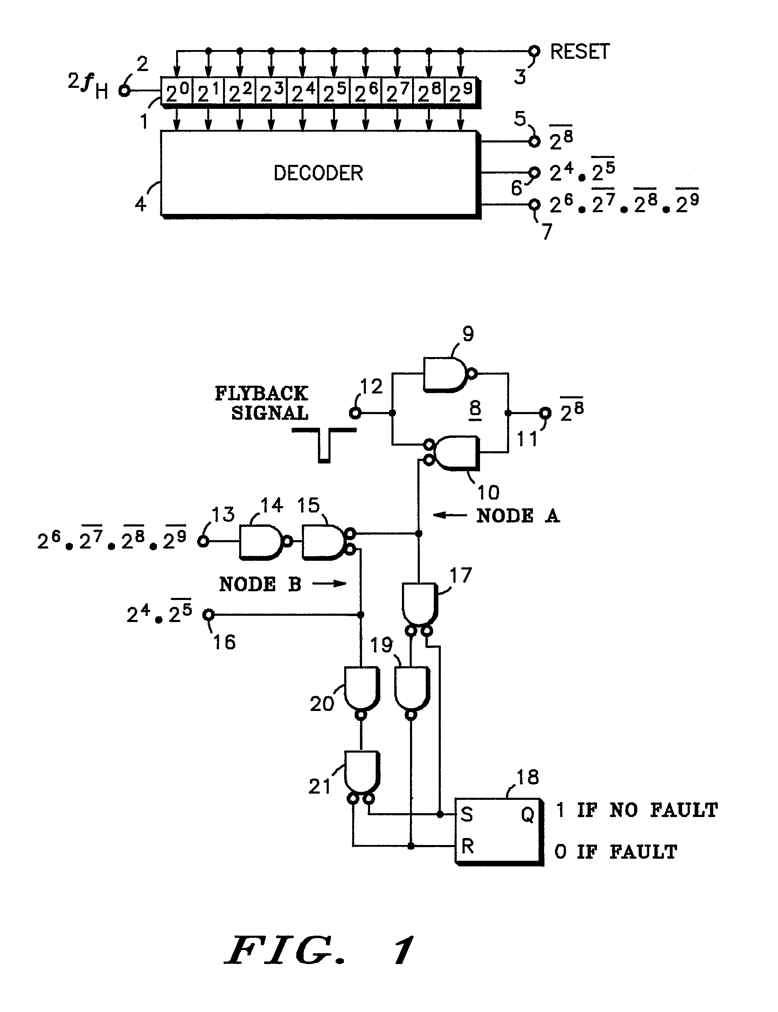

Referring to Figure 1 of the drawings a ten bit line counter 1 is clocked at twice the line scan frequency by a clock signal applied to its clock input terminal 2. An input terminal 3 receives a reset signal at the end of each frame, typically after 625 or 525 lines and is connected to reset each of the ten stages of the line counter 1.

Each of the stages of the line counter 1 are connected in parallel to a decoder 4 which has output terminals 5, 6 and 7. The decoder 4 essentially performs inverting and AND functions so that at its output terminal 5 appears the inverse of the ninth or $2^8$ stage of the line counter 1.

At the output terminal 6 the output signal is the AND function of the $2^4$ stage of the counter together with the inverse of the $2^5$ stage. At the terminal 7 the output signal is the AND function of the $2^6$ stage, together with the inverses of the $2^7$, the $2^8$ and $2^9$ stages of the line counter 1. These output signals appearing at the output terminals 5, 6 and 7 of the decoder 4 are used in the part of the circuit which will now be described.

A latch 8 is formed by a pair of $I^2L$ inverter gates 9 and 10. The gate 9 has a single output which is connected to the input of the gate 10. The gate 10 has two independent outputs a first of which is connected to the input of the gate 9 whilst the second output is connected to a node A.

A SET input of the latch 8 is formed by a node between the output of the gate 9 and the input of the gate 10 by connection to a SET input terminal 11. In similar manner a RESET input terminal 12 is connected to form a RESET node between the input to the gate 9 and the output of the gate 10 which is connected to the input of gate 9.

An input terminal 13 is connected to the input of an $I^2L$ inverter 14 whose output is connected to the input of another $I^2L$ inverter 15. The inverter 15 has two outputs one connected to the node A whilst a second is connected to form a node B together with an input terminal 16.

The node A is connected to the input of an $I^2L$ inverter 17 which has two outputs, a first of which is connected to the SET input of a latch 18, the second being connected to an input of an $I^2L$ inverter 19.

The node B is connected to the input of an $I^2L$ inverter gate 20 whose output is connected to the input of a further $I^2L$ inverter gate 21. The gate 21 has two outputs a first of which is connected to form a node at the SET input of the latch 18 together with the first output of the gate 17 whilst the second output of the gate 21 forms a node at the RESET input of the latch 18 together with the output of the gate 19.

The vertical deflection system for a cathode ray tube conventionally includes a power operational amplifier for driving the deflection coils. This power amplifier usually has a circuit which doubles the supply voltage seen by the output stages of the operational amplifier during the frame flyback period. The doubling circuit is activated by detection of the back EMF induced on an inductor, usually the deflection coils themselves, in the network connected to the output of the operational amplifier. This voltage doubling circuit generates a pulse known as the flyback pulse which after suitable potential division is used to form the flyback signal which is fed to the RESET terminal 12 of the latch 8.

The SET input terminal 11 of the latch 8 receives the output signal from the output terminal 5 of the decoder 4. The input terminals 13 and 16 receive the output signals appearing at the output terminals 7 and 6 respectively of the decoder 4.

Essentially the flyback signal presented to the RESET input terminal 12 of the latch 8 constitutes, if the deflection system is operating satisfactorily, a pulse which goes from a logically high to a logically low level. The signal received at the SET input terminal 11 of the latch 8 comprises a pulse which goes from a logically high to a logically low level between lines 256 and 512 of the frame scan period.

The signal presented at the input terminal 13 constitutes a pulse which goes from a logically low, to a logically high level between lines 64 and 128 of the line scan, whilst the signal presented at the input terminal 16 is a pulse which goes from a logically low to a logically high level between lines 16 and 32 of the line scan period and which repeats every 64 lines.

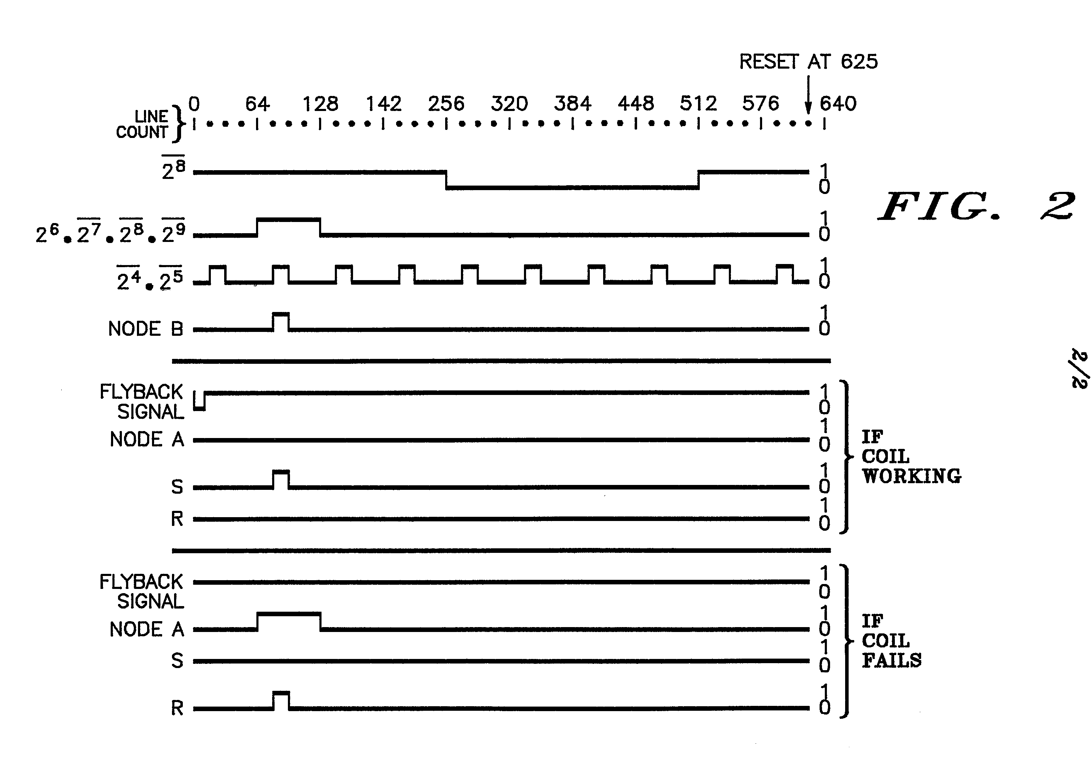

Reference may now also be be made to Figure 2 of the drawings which is a timing diagram illustrating operation of the circuit of Figure 1. The diagram is generally self explanatory and indicates the waveforms appearing at the terminals 11, 12, 13 and 16 and at node B and indicates the state of node A and of the SET and RESET inputs of the latch 18 for the two cases in which there is either a fault or no fault in the vertical deflection system.

During the period from 256 to 512 lines of the line scan, the latch 8 is set by means of the pulse fed from the output 5 of the decoder 4 presented at the input terminal 11 of the latch. At the start of the next frame the flyback signal appearing at the input terminal 12 RESETS the latch and therefore the output of the latch connected to node A goes logically low.

Between lines 64 and 128 the logically high pulse fed from the output 7 of the decoder 4 will appear at the input terminal 13 and in view of the double invertion provided by the inverting gates 14 and 15 the outputs of the gate 15 are able to go logically high. However in view of the wired AND connection at node A between the first output of the gate 15 and the output of the latch fed from the second output of the gate 10, node A will be held logically low, the latch having been previously reset by the flyback signal appearing at the RESET input 12.

Whilst the node A is logically low the first output of the gate 17 which is connected to the SET input of the latch 18 could go high, but this will depend on the state of the outputs of the gate 21, since the first outputs of each of the gates 17 and 21 are connected to perform a wired AND function at the SET input of the latch 18.

The outputs of the gate 21 can go high only during the time when the node B is logically high which occurs only when the logically high pulses which appear at terminals 13 and 16 are both present. The logically high pulse at the terminal 13 is present between lines 64 to 128 of the line scan whilst the terminal 16 receoves a logically high pulse between lines 16 and 32 and at intervals of every 64 lines thereafter.

Consequently the input terminals 13 and 16 both receive logically high pulses only between lines 80 and 96 of the line scan and therefore between lines 80 and 96 the node B will go logically high. The outputs of the gate 21 will therefore also be in a position to go logically high and the latch 18 will therefore be SET since the gates 17 and 21 will both have outputs that are logically high.

The output of the gate 19, which inverts the output of the gate 17 will be held low whilst Node A is low and consequently the RESET input of the latch 18, which is connected to the second output of the gate 21 will also be held low. Thus provided that a flyback signal appears to reset the latch 8 the output of latch 18 will be SET to a logically high condition indicating that the deflection system is operating correctly.

If the vertical deflection system fails and the flyback signal does not appear at the terminal 12, then the latch 8 is not RESET. The latch remains SET and the second output of the gate 10 remains able to go logically high during the appearance of the pulse at the terminal 13, which occurs between lines 64 and 128 of the line scan. Node A will therefore be logically high during that period.

The logically high level at the node A is directed to the RESET input of the latch 18 during the overlap period of the pulses appearing at the terminals 13 and 16 between lines 80 and 96 of the line scan. During this period the outputs of the gates 19 and 21 will both be logically high and the latch 18 will therefore be RESET and provide a logically low level at its output. This logically low level at the output of the latch 18 will indicate a failure in the vertical deflection sytem.

The indicated failure could be either an open or a short circuit in the vertical deflection coils themselves or could indicate a fault in the circuits driving those coils. The indication of this fault can then be used to shut down the beam current of the cathode ray tube to prevent damage.

Since the latch 8 is SET each field, the failure detection circuit checks the presence of the flyback signal during each vertical field and provides a digital output, logically high if no fault and logically low to indicate a fault. In some cases at switch on, the failure detection circuit may power up before the power operational amplifier of the vertical deflection system. However in this event the circuit continues checking the presence of the flyback pulse each field even after a failure is once detected.

The invention has been described by way of example and modifications may be made without departing from the scope of the invention. For example the pulses appearing at the terminals 11, 13 and 16 have been described as occurring during specific lines of the frame period. The exact line numbers are only exemplary, the only requirement being that one of the pulses presented at the terminal 16 must be within the period of the pulse appearing at the terminal 13. Also the pulse applied to the terminal 11 to SET the latch 8 must occur after completion of the pulse applied at the terminal 13. Also as illustrated the invention utilises $I^2L$ using wired AND functions but the invention may be implemented using any convenient logic.

The invention is particularly applicable to fabrication as an integrated circuit and may be incorporated into a single chip television processing system. In this case the invention has the advantage that no additional pin is required in the vertical deflection circuit to implement the failure detection circuit. Any pin which is not important during vertical flyback may be used.

## CLAIMS

1.      A failure detection circuit for detecting the failure of the vertical deflection system in a television type display, the circuit comprising logic circuit means responsive to a flyback signal derived from the back e.m.f. induced on the deflection coils during frame flyback, for providing a digital output signal having a logic value dependent upon the presence or otherwise of the flyback signal and indicative of the condition of the vertical deflection system.

2.      The circuit of claim 1 wherein the logic circuit includes latch means and means for setting the latch during a first predetermined period of the frame scan the latch being reset by the flyback signal.

3.      The circuit of claim 2 wherein the logic circuit includes further logic means having an input coupled to an output of the latch means and an output for providing the digital output signal, enabling means being provided for enabling the output of the further logic means to assume one of a plurality of logic values during a second predetermined period of the frame scan.

4.      The circuit of claim 2 wherein the first and second predetermined periods of the frame scan are non-overlapping.

5.      The circuit of claim 3 or 4 wherein the further logic means comprises output latch means and gating means, the gating means being operative when enabled by the enabling means during the said second predetermined period of the frame scan, to set or reset the output latch means in dependence upon the state of the said latch means.

6.     The circuit of claim 5 wherein the gating means has first and second enabling inputs coupled to the enabling means, the gating means being enabled during a period in which logic signals of a predetermined logic value are applied to both the first and second enabling inputs.

7.     The circuit of claim 6 wherein the gating means comprises a plurality of $I^2L$ gates.

8.     The circuit of claim 6 or 7 wherein the enabling means is operative to apply logic signals of the said predetermined logic value to the first enabling input during a third predetermined period of the frame scan and to the second enabling input during a fourth predetermined period of the frame scan wherein the fourth predetermined period lies entirely within the third predetermined period.

9.     The circuit of claim 8 wherein the first predetermined period of the frame scan occurs after the third predetermined period.

10.     The circuit of any one of claims 3 to 9 wherein the enabling means comprises a line counter for counting lines of the line scan of the display and decoding means coupled to predetermined stages of the counter and having one or more outputs for providing enabling logic signals having predetermined logic values during respective predetermined periods of the frame scan.

11.     The circuit of claim 10 wherein the decoding means comprises gating means for gating together output signals fed from said predetermined stages of the counter.

- 11 -

0164258

12. A failure detection circuit as claimed in any preceding claim and fabricated in integrated circuit form.

13. A television receiver including a failure detection circuit as claimed in any preceding claim.

*FIG. 1*

FIG. 2

0164258

Application number

**EUROPEAN SEARCH REPORT**

## DOCUMENTS CONSIDERED TO BE RELEVANT

EP 85303880.0

| Category | Citation of document with indication. where appropriate, of relevant passages | Relevant to claim | CLASSIFICATION OF THE APPLICATION (Int Cl 4) |
|---|---|---|---|
| A | <u>DE - A1 - 2 624 777</u> (SONY) -- | | H 04 N 3/20 <br> H 04 N 5/21 |
| A | <u>DE - A1 - 3 223 441</u> (RCA) ---- | | |

**TECHNICAL FIELDS SEARCHED (Int. Cl 4)**

H 04 N  3/00
H 04 N  5/00
H 04 N 17/00
H 01 J 29/00

The present search report has been drawn up for all claims

| Place of search | Date of completion of the search | Examiner |
|---|---|---|
| VIENNA | 05-09-1985 | BENISCHKA |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82